Europäisches Patentamt

European Patent Office

Office européen des brevets

(19)

(11) EP 0 252 849 B2

(12) NOUVEAU FASCICULE DE BREVET EUROPEEN

(45) Date de publication et mention de la décision concernant l'opposition:
**17.09.1997 Bulletin 1997/38**

(51) Int Cl.$^6$: **G07F 7/10**, H04L 9/00

(45) Mention de la délivrance du brevet:
**18.03.1992 Bulletin 1992/12**

(21) Numéro de dépôt: **87401619.9**

(22) Date de dépôt: **09.07.1987**

(54) **Procédé pour authentifier une donnée d'habilitation externe par un objet portatif tel qu'une carte à mémoire**

Verfahren zum Beglaubigen externer Ermächtigungsdaten mittels eines tragbaren Objektes, wie etwa eine Speicherkarte

Method for authenticating external authorization data by a portable object such as a memory card

(84) Etats contractants désignés:
**AT BE CH DE ES FR GB IT LI LU NL SE**

(30) Priorité: **11.07.1986 FR 8610209**

(43) Date de publication de la demande:
**13.01.1988 Bulletin 1988/02**

(73) Titulaire: **BULL CP8**
**78190 Trappes (FR)**

(72) Inventeurs:
• **Hazard, Michel**
**F-78124 Mareil/Maudre (FR)**
• **Ugon, Michel**
**F-78310 Maurepas (FR)**

(74) Mandataire: **Colombe, Michel et al**
**Direction de la Propriété Intellectuelle BULL SA**
**Poste courrier:LV 59C18**
**68 route de Versailles**
**78430 Louveciennes (FR)**

(56) Documents cités:
EP-A- 143 096          EP-A- 0 028 965
EP-A- 0 096 599        EP-A- 0 114 773
WO-A-85/04299          DE-A- 2 824 135
FR-A- 2 536 928        US-A- 4 465 901

• **CRYPTOGRAPH a new dimension in computer date security; C.H. Meyer et al; Ed. J. Wiley 1982, pages 455,456**

EP 0 252 849 B2

## Description

L'invention se rapporte à un procédé pour authentifier une donnée d'habilitation externe par un objet portatif tel qu'une carte à mémoire.

L'invention s'applique notamment à l'authentification d'un code confidentiel attribué au titulaire d'une carte à mémoire.

Dans la majorité des applications qui mettent en oeuvre une carte à mémoire, chaque titulaire d'une carte se voit attribuer un code confidentiel par un organisme habilité. Ce code propre au titulaire et qui personnalise sa carte est préenregistré dans la mémoire de la carte. L'organisme habilité enregistre également dans cette mémoire des informations ou paramètres qui définissent les limites d'utilisation de la carte, notamment les services qui peuvent être obtenus au moyen de cette carte.

Le titulaire accède à ces services par l'intermédiaire d'appareils auquel il accouple temporairement sa carte. Ces appareils n'entament généralement le processus de délivrance du service demandé qu'après des contrôles visant notamment à s'assurer que le porteur de la carte en est bien le titulaire et que la carte donne bien droit à la délivrance du service demandé. Bien que ces contrôles puissent varier d'un service à un autre, il en est un qui est toujours effectué sur le code confidentiel. Plus précisément, le porteur de la carte entre son code dans l'appareil, par l'intermédiaire d'un clavier par exemple, le code entré est ensuite transmis à la carte pour être comparé à celui préenregistré dans la mémoire. En cas d'égalité, le processus de délivrance continue, et en cas d'inégalité il y a automatiquement interruption du processus de délivrance du service demandé. Ce contrôle permet d'éviter l'utilisation de la carte par toute personne autre que son titulaire (voir EP-A-96599 par exemple).

Cependant, un fraudeur en possession d'une carte volée a la possibilité de faire des essais en grand nombre jusqu'à trouver le bon code qui correspond à celui préenregistré dans la mémoire de la carte. Pour pallier une telle tentative de fraude, il est prévu dans la carte un compteur d'erreurs qui est incrémenté à chaque présentation d'un code erroné. Dès que ce compteur atteint un nombre prédéterminé, la carte est automatiquement rendue inutilisable ; Comme cela est décrit dans le brevet américain n° 4 092 524 correspondant au brevet français n° 2 311 360.

Ce premier perfectionnement s'avère insuffisant si le fraudeur arrive à interdire ou inhiber la fonction de mémorisation de ce compteur en coupant l'alimentation de la carte à l'instant précis où le compteur doit être incrémenté. La détection de cet instant est possible par l'analyse des signaux échangés entre la carte et l'appareil. En effet, il suffit au fraudeur de repérer les signaux transmis par l'appareil qui correspondent à la tension d'écriture envoyée à la carte pour lui permettre d'écrire dans le compteur d'erreurs.

Un second perfectionnement décrit dans le brevet américain n° 4 211 919 correspondant au brevet français n° 2 401 459 de la demanderesse permet d'éviter ce type de fraude en prévoyant un processus de traitement identique que le code présenté soit bon ou mauvais. En effet, sachant que le fraudeur peut repérer l'instant où l'appareil transmet la tension d'écriture à la carte et que cette tension n'est transmise que dans le cas où le code présenté à la carte est mauvais, le perfectionnement consiste à transmettre également une tension d'écriture à la carte même si le code présenté est bon. Ainsi, on réalise la symétrie des temps de traitement d'un code bon ou d'un code erroné de façon à ce qu'un fraudeur ne puisse tirer partie d'une différence entre ces temps de traitement.

Néanmoins, cette symétrie des temps de traitement est une contrainte pour le programmeur et, dans la pratique, il s'avère très difficile de pouvoir mettre en oeuvre cette contrainte.

Selon le procédé conforme à l'invention, la reconnaisance d'une donnée d'habilitation externe ne s'effectue pas par une simple comparaison entre cette donnée et la donnée d'habilitation de référence enregistrée dans la carte.

L'invention propose donc un procédé selon la revendication 1.

D'autres avantages et détails du procédé conforme à l'invention vont être mis en évidence dans la description qui va suivre faite en référence aux dessins annexés dans lesquels :

- la figure 1 illustre le principe du procédé suivant un premier mode de réalisation,
- et la figure 2 illustre une variante de ce procédé.

Les figures montrent schématiquement les caractéristiques d'une carte à mémoire (1) et d'un appareil (2) tel qu'un appareil de délivrance de services, qui sont nécessaires à la mise en oeuvre du procédé conforme à l'invention.

La carte à mémoire (1) comprend essentiellement une mémoire (M1) et des circuits de traitement (T1) tels qu'un microprocesseur. Une telle carte est notamment décrite dans les brevets américains N° 4 211 919 et 4 382 279 correspondant respectivement aux brevets français N° 2 401 459 et 2 461 301 de la demanderesse.

Succintement, la mémoire (M1) comprend au moins deux zones de mémoire (Z1, Z2). La zone de mémoire (Z1) est inaccessible en écriture et en lecture depuis l'extérieur, alors que la zone de mémoire (Z2) n'est accessible qu'en lecture depuis l'extérieur. Par contre, ces zones (Z1, Z2) sont librement accessibles en lecture et en écriture par les circuits de traitement (T1).

La mémoire (M1) et les circuits de traitement (T1) échangent des informations par l'intermédiaire d'un bus (b1) qui véhicule des signaux de commande, d'adresse et de donnée. Le bus (b1) est relié à une interface d'entrée-sortie (I1).

L'appareil (2) se compose essentiellement d'une mémoire (M2), de circuits de traitement (T2) tels qu'un microprocesseur et d'un dispositif d'entrée (20) tel qu'un clavier par exemple. Les différents circuits de l'appareil (2) échangent des informations entre eux par l'intermédiaire d'un bus (b2) relié à une interface d'entrée-sortie (12). Bien entendu, l'appareil comprend également tous les circuits nécessaires pour la délivrance du service pour lequel il a été conçu.

L'accouplement d'une carte (1) avec l'appareil (2) est réalisé par l'intermédiaire des deux interfaces (11, 12) reliées entre elles par une liaison (L) électrique ou optique. A titre d'exemple, ces deux interfaces sont du type de celles décrites dans le brevet français de la demanderesse N° 2 490 367, et l'interface (12) de l'appareil (2) peut être avantageusement équipée du connecteur tel que décrit dans le brevet américain de la demanderesse N° 4 443 049 pour accoupler de façon amovible la carte (1) à l'appareil (2). Enfin, le mode de dialogue ou de transmission des informations entre la carte (1) et l'appareil (2) peut être avantageusement celui décrit dans le brevet américain de la demanderesse N° 4 556 958.

Il va être décrit ci-après le principe du procédé conforme à l'invention suivant un premier mode de, réalisation décrit en référence à la figure (1).

Le procédé se décompose en deux phases. La première phase consiste à initialiser la carte et l'appareil, et la deuxième phase consiste dans la mise en oeuvre proprement dite du procédé pour la reconnaissance d'une donnée d'habilitation telle que le code confidentiel attribué au titulaire d'une carte à mémoire.

La phase d'initialisation consiste essentiellement à prédéterminer certaines informations et à les enregistrer soit dans la mémoire (M1) de la carte (1), soit dans la mémoire (M2) de l'appareil (2).

Un organisme habilité, c'est-à-dire l'organisme responsable d'un service qui peut être délivré par l'appareil (2) sur présentation d'une carte (1), contrôle cette phase d'initialisation avant de délivrer une carte.

Tout d'abord, l'organisme habilité prédétermine un résultat (Rk) et une clé secrète (S). Le résultat (Rk) est décomposé en plusieurs champs (Rk1, Rk2,..., Rkn) qui doivent satisfaire des conditions ou des relations prédéterminées.

A titre d'exemple, le résultat prédéterminé (Rk) est décomposé en trois champs (Rk1, Rk2, Rk3) tels que :

$$Rk1 = Rk2 = ad \ Cu$$

où (ad Cu) est l'adresse de mémoire d'un mot de la zone (Z2) de la mémoire (M1) de la carte (1), et (Cu) un paramètre commun à toutes les cartes qui peuvent accéder au service délivré par l'appareil (2).

L'organisme habilité calcule alors une information (E) telle que :

$$E = f (Rk, S, Cu)$$

où (f) est la fonction directe d'un algorithme inversible (A1) par exemple tel que celui décrit dans la demande de brevet français publiée sous le n° 2 566 155. Ce calcul est exécuté sur toute machine connue en soi ayant une mémoire et des circuits de traitement appropriés ou de préférence par les circuits de traitement d'une carte semblable à la carte (1) pour mieux protéger la fonction (f) et la clé secrète (S).

La phase d'initialisation se termine par l'enregistrement de données dans la mémoire (M1) de la carte (1) et dans la mémoire (M2) de l'appareil (2).

On enregistre dans la zone de mémoire (Z1) de la mémoire (M1) de la carte (1), la clé secrète (S) précitée, un programme (P11) qui est la mise en oeuvre de la fonction inverse ($f^{-1}$) de l'algorithme (A1) précité, un programme (P12) qui est la mise en oeuvre de la fonction inverse (g-1) d'un second algorithme (A2) dont le rôle sera explicité plus loin, ainsi qu'un code confidentiel (C1) qui sera ensuite attribué au titulaire de la carte (1). La zone de mémoire (Z1) est ensuite verrouillée pour rendre ces informations inaccessibles de l'extérieur, mais accessibles en interne par les circuits de traitement (T1) de la carte (1).

On enregistre dans la zone (Z2) de la mémoire (M1) de la carte (1) le paramètre (Cu) précité, et la zone de mémoire (Z2) est ensuite verrouillée en écriture de l'extérieur.

On enregistre dans la mémoire (M2) de l'appareil (2) l'information (E) calculée précédemment, ainsi qu'un programme (P22) qui est la mise en oeuvre de la fonction directe (g) du second algorithme (A2) précité.

L'appareil (2) est en état de fonctionnement et l'organisme habilité délivre la carte (1) ainsi personnalisée à un titulaire en lui attribuant le code confidentiel (C1) que le titulaire doit garder secret. Bien entendu, la clé secrète (S) n'est pas dévoilée au titulaire de la carte et est seule connue de l'organisme habilité.

La phase de reconnaissance d'un code confidentiel ainsi attribué au porteur d'une carte s'effectue de la manière décrite ci-dessous.

Une fois la carte (1) accouplée à l'appareil (2), le porteur de la carte entre un code confidentiel (C1) au clavier (20) de l'appareil (2). Ce code (C1) est combiné ensuite avec l'information (E) préenregistrée dans la mémoire (M2) de l'appareil (2).

D'une façon générale, cette combinaison consiste à appliquer la fonction directe (g) mise en oeuvre par le programme (P22) du second algorithme inversible (A2) qui est par exemple du même type que l'algorithme (A1).

Les circuits de traitement (T2) exécutent ce programme (P22) qui prend en compte l'information (E) et le code confidentiel (C1) entré au clavier (20) pour donner un message chiffré (M) tel que :

$$M = g (E, C1)$$

Ce message (M) est ensuite transmis à la carte (1) par la ligne de transmission (L). Le code confidentiel (C1) entré au clavier est noyé dans le message (M) et est donc bien protégé pendant sa transmission. La première opération effectuée par la carte (1) est de faire appliquer la fonction inverse ($g^{-1}$) du second algorithme (A2) sur le message d'entrée (M).

Plus précisément, les circuits de traitement (T1) de la carte (1) exécutent un programme (P12) qui est la mise en oeuvre de la fonction inverse ($g^{-1}$) et qui a été préenregistré dans la zone (Z1) de la mémoire (M1) de la carte (1) pendant la phase d'initialisation. Ce programme (P12) prend en compte le message (M) et le code confidentiel de référence (C1) préenregistré dans la mémoire (M1) par l'organisme habilité avant délivrance de la carte. L'exécution de ce programme donne une information (E') telle que :

$$E' = g^{-1} (M, C1).$$

Si le code (C1) entré au clavier 20 et le code (C1) de référence sont identiques, l'information (E') sera identique à l'information (E) précédente. La deuxième opération effectuée par la carte (1) est de faire appliquer la fonction inverse ($f^{-1}$) du premier algorithme (A1) sur l'information (E').

Plus précisément, les circuits de traitement (T1) exécutent le programme (P11) préenregistré dans la mémoire (M1) de la carte (1) pendant la phase d'initialisation. Ce programme (P11) prend en compte l'information (E'), la clé secrète (S) et la paramètre (Cu) préenregistrés dans la carte (1) pour aboutir à un résultat (R'k) tel que :

$$R'k = f^{-1} (E', S, Cu)$$

Une fois le résultat (R'k) calculé, la carte vérifie que ce résultat satisfait une relation prédéterminée pour prouver que les deux codes (C1) sont identiques et que le porteur de la carte (1) présentée à l'appareil (2) est bien le titulaire de la carte (1).

Du fait de l'utilisation d'un algorithme inversible, le résultat (R'k) doit être identique au résultat prédéterminé (Rk) qui a permis de calculer l'information (E) d'origine, à condition bien entendu que les codes (C1) soient identiques.

Le résultat (R'k) doit satisfaire la même relation que celle satisfaite par le résultat (Rk) et telle que :

$$R'k = R'k1, R'k2, R'k3$$

avec

$$R'k1 = R'k2 = ad\ Cu$$

où (ad Cu) est l'adresse mémoire à laquelle est enregistré le paramètre (Cu) dans la zone (Z2) de la mémoire (M1) de la carte (1).

Ainsi, le porteur de la carte (1) ne sera pas reconnu comme son titulaire si le code (C1) entré au clavier (20) de l'appareil (1) n'est pas identique au code (C1) préenregistré dans la carte (1). En effet, si les deux codes sont différents, la carte (1) en combinant le message (M) reçu et le code (C1) ne retrouvera pas l'information (E) d'origine, et le résultat (R'k) calculé par la carte (1) ne pourra pas satisfaire la relation prédéterminée définie à partir de l'information d'origine (E).

Selon une variante, le temps de traitement par la carte (1) d'un message chiffré (M) est variable d'un code confidentiel (C1) à l'autre. Pour cela il suffit qu'au moins l'un des algorithmes (A1, A2) prennent en compte un paramètre qui correspond à une partie du code confidentiel (C1) à traiter. Ce paramètre peut par exemple déterminer le nombre de fois que l'on doit parcourir une boucle de programme dans l'algorithme.

A titre d'exemple et selon un type particulier de réalisation de l'invention les fonctions (g) et ($g^{-1}$) sont identiques et sont chacune mise en oeuvre par une fonction OU EXCLUSIF.

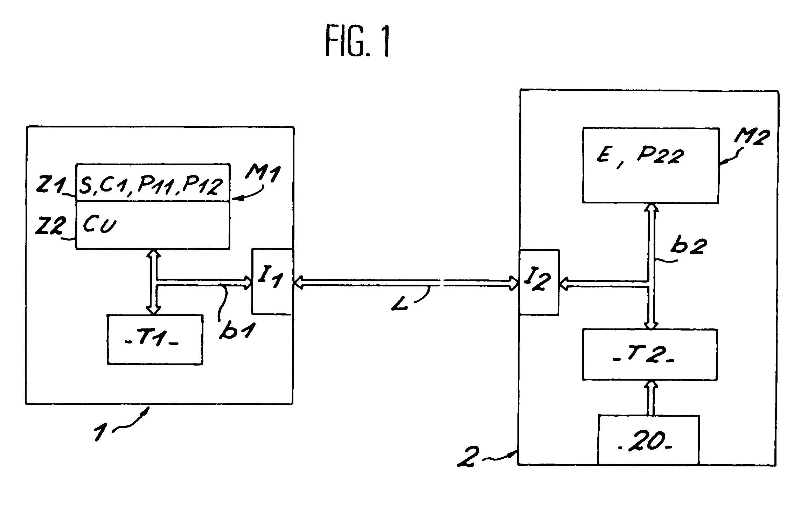

Le principe de base de l'invention tel qu'illustré en référence à la figure 1, peut être amélioré par l'utilisation d'une information (E) variable pour que le message (M) communiqué à la carte ne soit jamais le même pour un même code confidentiel entré dans l'appareil.

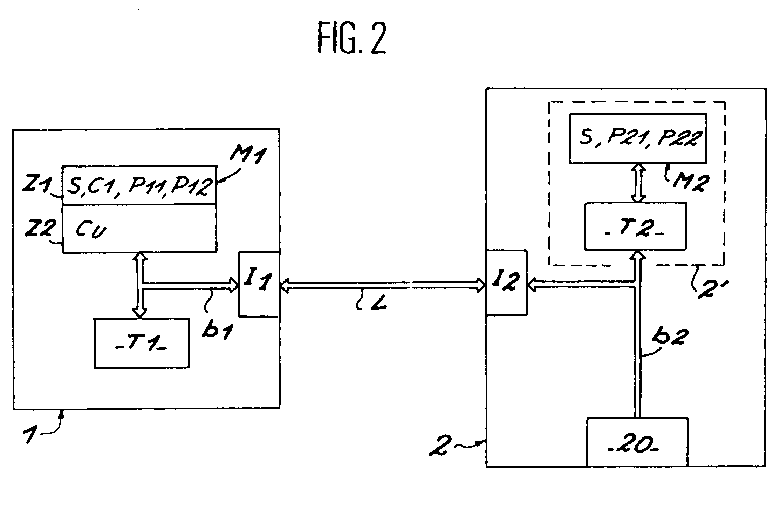

Pour que ce message (M) soit variable, il suffit que le paramètre (Cu) soit variable pour une même carte (1). Dans cette variante illustrée à la figure 2, la zone (Z2) de la mémoire (M1) de la carte (1) est alors une zone de contrôle telle qu'à chaque utilisation de la carte (1) au moins un bit de cette zone est modifié. Le paramètre (Cu) est alors le mot mémoire de la zone (Z2) qui contient le dernier bit modifié lors de la précédente utilisation de la carte (1).

Le paramètre (Cu) étant variable et spécifique à chaque carte, l'appareil (2) doit calculer à chaque fois l'information (E) telle que :

$$E = f (Rk, S, Cu).$$

Pour effectuer ce calcul, la mémoire (M2) de l'appareil (2) doit contenir un programme (P11) correspondant à la fonction (f) de l'algorithme (A1) précité et la clé secrète (S). En outre, l'appareil définit à chaque fois un résultat (Rk) tel que

$$Rk = Rk1, Rk2, Rk3$$

avec

$$Rk1 = Rk2 = ad\ (Cu).$$

Bien entendu, la carte (1) communique à l'appareil (2) le paramètre (Cu) et son adresse (ad) pour permettre le calcul de l'information (E). L'information (E) est ensuite traitée comme dans le mode de réalisation précédent.

Comme les informations à caractère secret sont protégées dans la carte, il faut prendre des mesures de protection pour les informations à caractère secret enregistrées dans la mémoire (M2) de l'appareil (2). Une solution consiste à prendre des algorithmes (A1, A2) du type à clé publique. Une autre solution consiste à intégrer la mémoire (M2) et les circuits de traitement (T2) dans des plaquettes semi-conductrices (puces) séparées ou non et montées dans un boîtier (2'). Avantageusement ces boîtiers sont conçus conformément aux brevets américains n° 4 211 919 et 4 382 279 de la demanderesse et montés dans un support portatif tel qu'une carte à mémoire normalisée identique à la carte (1).

Dans l'exemple précédent, le résultat (Rk) est tel que les champs (Rk1) et (Rk2) sont identiques et chacun est égal à l'adresse mémoire du paramètre (Cu).

Cette condition peut évidemment être toute autre et ne pas faire intervenir obligatoirement l'adresse du paramètre (Cu).

Les exemples décrits se rapportent à la reconnaissance du code confidentiel (PIN : Personal Identification Number), mais le procédé s'applique plus généralement à la reconnaissance d'une donnée d'habilitation externe à la carte (1) et qui doit être authentifiée par la carte pour la poursuite du dialogue entre la carte (1) et l'appareil (2).

## Revendications

1. Procédé pour authentifier, par un objet portatif tel qu'une carte à mémoire comprenant des circuits de traitement, une donnée d'habilitation C1' introduite dans un appareil de traitement de données tel qu'un appareil de délivrance de services auquel l'objet portatif est accouplé, ledit appareil incluant des moyens d'entrée pour recevoir ladite donnée d'habilitation, procédé utilisant une fonction de chiffrement f d'un premier algorithme de chiffrement inversible et une fonction de chiffrement g d'un second algorithme de chiffrement inversible, ledit appareil comprenant une mémoire (M2) stockant le second algorithme sous la forme d'un programme de mise en oeuvre de celui-ci et des circuits de traitement (T2) pour exécuter ce programme et ledit objet portatif incluant une mémoire stockant,sous la forme de programmes, des premier et second algorithmes des fonctions de déchiffrement $f^{-1}$ et $g^{-1}$ correspondant respectivement audits algorithmes des fonctions de chiffrement f et g, une clé secrète S, une donnée d'habilitation de référence C1, et un paramètre Cu de l'objet portatif, le procédé comprenant les étapes consistant à :

   - prédéterminer une information auxiliaire E calculée en appliquant audit premier algorithme de la fonction de chiffrement f au moins un résultat Rk satisfaisant une condition ou une relation prédéterminée, ladite clé secrète S, et ledit paramètre Cu de façon que : E = f (Rk, S, Cu);

   - dans l'appareil, élaborer un message (M) en appliquant au dit second algorithme de la fonction de chiffrement g la dite donnée d'habilitation C1' devant être authentifiée, et la dite information auxiliaire E, et transmettre le dit message au dit objet portatif;

   - dans l'objet portatif, appliquer au dit second algorithme de la fonction de déchiffrement $g^{-1}$ le dit message M reçu et la dite donnée d'habilitation de référence stockée C1 pour en déduire une information auxiliaire E' telle que E' = $g^{-1}$ (M, C1), puis appliquer au dit premier algorithme de la fonction de déchiffrement $f^{-1}$ la dite information auxiliaire E' ainsi déduite, ainsi que la dite clé secrète S et ledit paramètre Cu stockés, pour en déduire un résultat Rk' tel que Rk' = $f^{-1}$ (E', S, Cu), et vérifier que ce résultat Rk' satisfait la même condition ou relation prédéterminée que le résultat Rk.

2. Procédé selon la revendication 1, dans lequel ledit paramètre Cu de l'objet portatif est variable..

3. Procédé selon la revendication 2, dans lequel le résultat Rk comprend une valeur égale à une adresse du dit paramètre variable Cu en mémoire de l'objet portatif.

4. Procédé selon la revendication 2, incluant l'étape consistant à réserver une zone mémoire de l'objet portatif, modifier l'état d'au moins un bit de la zone après chaque utilisation de l'objet portatif, et utiliser en tant que paramètre variable Cu le mot mémoire de la zone qui contient le bit le plus récemment modifié.

5. Procédé selon la revendication 1, dans lequel le résultat Rk comprend au moins deux champs Rk1 et Rk2 et la dite condition prédéterminée inclut l'égalité : Rk1 = Rk2.

6. Procédé selon la revendication 1, dans lequel les dits algorithmes des fonctions de chiffrement f et g sont du type à clé publique.

7. Procédé selon la revendication 1, dans lequel le dit second algorithme de chiffrement inversible est tel que le temps de traitement du message M par l'objet portatif est fonction d'un paramètre, ce paramètre comprenant la dite donnée d'habilitation C1 et le temps de traitement variant chaque fois que le dit paramètre varie.

8. Procédé selon la revendication 7, dans lequel le dit paramètre définit le nombre de fois qu'une boucle de programme est exécutée.

**Claims**

1. Method, using a portable object such as a smart card comprising processing circuits, for authenticating an authorisation data element C1' introduced into a data processing device such as a service supply device to which the portable object is coupled, said device including input means for receiving said authorisation data element, said method using a function f for coding a first invertible coding algorithm and a function g for coding a second invertible coding algorithm, said device comprising a memory (M2) storing the second algorithm in the form of a program for implementing the latter and processing circuits (T2) for executing this program and said portable object including a memory storing, in the form of programs, first and second algorithms of the decoding functions $f^{-1}$ and $g^{-1}$ corresponding respectively to said algorithms of the coding functions f and g, a secret key S, a reference authorisation data element C1 and a parameter Cu of the portable object, the method comprising the steps consisting in:

   - predetermining an auxiliary item of information E calculated by applying to said first algorithm of the coding function f at least one result Rk satisfying a condition or a predetermined relationship, said secret key S and said parameter Cu such that: E = f (Rk, S, Cu);

   - in the device, preparing a message (M) by applying to said second algorithm of the coding function g said authorisation data element C1' that has to be authenticated, and said auxiliary item of information E, and transmitting said message to said portable object;

   - in the portable object, applying to said algorithm of the decoding function $g^{-1}$ said message M received and said stored reference authorisation data element C1 in order to deduce therefrom an auxiliary item of information E' such as E' = $g^{-1}$ (M, C1), then applying to said first algorithm of the decoding function $f^{-1}$ said auxiliary item of information E' thus deduced, together with the secret key S and said parameter Cu, both stored, in order to deduce therefrom a result Rk' such that Rk' = $f^{-1}$ (E', S, Cu), and to verify that this result Rk' satisfies the same condition or predetermined relationship as the result Rk.

2. Method according to Claim 1, in which said parameter Cu of the portable object is variable.

3. Method according to Claim 2, in which the result Rk comprises a value equal to an address of said variable parameter Cu in the memory of the portable object.

4. Method according to Claim 2, including the step consisting in reserving a memory zone in the portable object, modifying the state of at least one bit of the zone after each use of the portable object, and using as a variable parameter Cu the storage word of the zone that contains the most recently modified bit.

5. Method according to Claim 1, in which the result Rk comprises at least two fields Rk1 and Rk2, and said predetermined condition includes the equality: Rk1 = Rk2.

6. Method according to Claim 1, in which said algorithms of the coding functions f and g are of the public-key type.

7. Method according to Claim 1, in which said second invertible coding algorithm is such that the time for processing the message M by the portable object is a function of a parameter, this parameter comprising said authorisation data element C1 and the processing time varying each time said parameter varies.

8. Method according to Claim 7, in which said parameter defines the number of times that a program loop is executed.

**Patentansprüche**

1. Verfahren zum Authentifizieren, mittels eines tragbaren Objektes wie etwa einer Speicherkarte, von Ermächtigungsdaten C1', die in ein Datenverarbeitungsgerät wie etwa ein Gerät zur Abgabe von Serviceleistungen eingegeben werden, mit dem das tragbare Objekt gekoppelt ist, wobei das Gerät Eingabemittel für den Empfang der Ermächtigungsdaten enthält, wobei das Verfahren eine Verschlüsselungsfunktion f eines ersten Algorithmus einer inversiblen Verschlüsselung sowie eine Verschlüsselungsfunktion g eines zweiten Algorithmus einer inversiblen Verschlüsselung verwendet, wobei das Gerät einen Speicher (M2), der den zweiten Algorithmus in Form eines Programms für seine Ausführung speichert, sowie Verarbeitungsschaltungen (T2) für die Abarbeitung dieses Programms enthält und das tragbare Objekt einen Speicher enthält, der in Form von Programmen erste und zweite Algorithmen von Entschlüsselungsfunktionen $f^{-1}$ und $g^{-1}$, die den jeweiligen Algorithmen der Verschlüsselungsfunktionen f bzw. g entsprechen, einen geheimen Schlüssel S, Referenzermächtigungsdaten C1 sowie einen Parameter Cu des tragbaren Objekts speichert, wobei das Verfahren die Schritte enthält, die darin bestehen:

- Hilfsinformationen E festzulegen, die durch Eingeben wenigstens eines Resultats Rk, das eine vorgegebene Bedingung oder eine vorgeben Beziehung erfüllt, des geheimen Schlüssels S und des Parameters Cu in den ersten Algorithmus der Verschlüsselungsfunktion f berechnet werden, derart, daß: E = f(Rk, S, Cu);

- in dem Gerät eine Nachricht (M) auszuarbeiten, indem in den zweiten Algorithmus der Verschlüsselungsfunktion g die Ermächtigungsdaten C1' vor deren Authentifizierung sowie die Hilfsinformationen E eingegeben werden, sowie die Nachricht an das tragbare Objekt zu übertragen;

- im tragbaren Objekt die empfangene Nachricht M und die gespeicherten Referenzermächtigungsdaten C1 in den zweiten Algorithmus der Entschlüsselungsfunktion $g^{-1}$ einzugeben, um daraus Hilfsinformationen E' abzuleiten, derart, daß E' = $g^{-1}$(M, C1), dann die so abgeleiteten Hilfsinformationen E' sowie den geheimen Schlüssel S und den Parameter Cu, die gespeichert sind, in den ersten Algorithmus der Entschlüsselungsfunktion $f^{-1}$ einzugeben, um daraus ein Resultat Rk' abzuleiten, derart, daß Rk'= $f^{-1}$(E', S, Cu), und zu verifizieren, ob dieses Resultat Rk' die gleiche vorgegebene Bedingung oder die gleiche vorgegebene Beziehung wie das Resultat Rk erfüllt.

2. Verfahren nach Anspruch 1, in dem der Parameter Cu des tragbaren Objekts variabel ist.

3. Verfahren nach Anspruch 1, in dem das Resultat Rk einen Wert enthält, der gleich einer Adresse des variablen Parameters Cu im Speicher des tragbaren Objekts ist.

4. Verfahren nach Anspruch 2, das den Schritt enthält, der darin besteht, eine Speicherzone des tragbaren Objekts zu reservieren, den Zustand wenigstens eines Bits der Zone nach jeder Verwendung des tragbaren Objekts zu modifizieren und das Speicherwort der Zone, das das zuletzt modifizierte Bit enthält, als variablen Parameter Cu zu verwenden.

5. Verfahren nach Anspruch 1, in dem das Resultat Rk wenigstens zwei Felder Rk1 und Rk2 enthält und die vorgegebene Bedingung die Gleichheit: Rk1 = Rk2 enthält.

6. Verfahren nach Anspruch 1, in dem die Algorithmen der Verschlüsselungsfunktionen f und g vom Typ mit bekanntem Schlüssel sind.

7. Verfahren nach Anspruch 1, in dem der zweite Algorithmus der inversiblen Verschlüsselung von der Art ist, daß die Verarbeitungzeit für die Nachricht M durch das tragbare Objekt von einem Parameter abhängt, der die Ermächtigungsdaten C1 enthält, wobei sich die Verarbeitungzeit bei jeder Änderung des Parameters ändert.

8. Verfahren nach Anspruch 7, in dem der Parameter die Anzahl definiert, in der eine Programmschleife ausgeführt wird.

FIG. 1

EP 0 252 849 B2

# FIG. 2